# EUROPEAN PATENT APPLICATION

(11) **EP 4 641 712 A1**
(43) Date of publication of application: **29.10.2025**
(21) Application number: 23906980.0
(22) Date of filing: 18.12.2023
(51) Int. Cl.: H01M 8/0228, C23C 28/00, C25B 1/042, C25B 9/65, H01M 8/021, H01M 8/0215, H01M 8/12

(54) **INTERCONNECTOR FOR SOLID OXIDE ELECTROCHEMICAL CELL STACK, AND SOLID OXIDE ELECTROCHEMICAL CELL STACK**

(30) Priority: 20.12.2022 JP 2022203365
(71) Applicant: Toshiba Energy Systems & Solutions Corporation, Saiwai-ku Kawasaki-shi Kanagawa 2120013 (JP)
(72) Inventor: KOBAYASHI, Shohei, Kawasaki-shi, Kanagawa 212-0013 (JP); IMAI, Kiyoshi, Tokyo 105-8001 (JP); KAMEDA, Tsuneji, Tokyo 105-8001 (JP); ASAYAMA, Masahiro, Kawasaki-shi, Kanagawa 212-0013 (JP); YOSHINO, Masato, Kawasaki-shi, Kanagawa 212-0013 (JP); OSADA, Norikazu, Kawasaki-shi, Kanagawa 212-0013 (JP); INUZUKA, Riko, Kawasaki-shi, Kanagawa 212-0013 (JP)
(74) Representative: Hoffmann Eitle
(86) International application number: PCT/JP2023/045308
(87) International publication number: WO 2024/135620

(57) **Abstract**

An interconnector for a solid oxide electrochemical cell stack, includes: a metal substrate including an iron-based alloy containing chromium; and a protective film provided on the metal substrate in a first direction. The protective film includes: a metal layer provided on a surface of the metal substrate and containing a first metal element; an oxide layer provided above the metal layer and including at least one oxide selected from the group consisting of a spinel oxide and a perovskite oxide, the at least one oxide containing a second metal element different from the first metal element; and a mixed layer provided between the metal layer and the oxide layer and having a first phase and a second phase, the first phase including the first metal element, and the second phase including the at least one oxide.

## Description

### FIELD

Embodiments relate to an interconnector for a solid oxide electrochemical cell stack and a solid oxide electrochemical cell stack.

### BACKGROUND

Hydrogen is one of new energy sources for a decarbonized society. As an application field of the hydrogen, fuel cells, which convert chemical energy into electrical energy by electrochemically reacting hydrogen and oxygen, are attracting attention. Fuel cells have high energy utilization efficiency and are being developed as large-scale distributed power sources, household power sources, and mobile power sources. Among the fuel cells, a solid oxide fuel cell (SOFC), which uses an electrolyte made of solid oxide to obtain electrical energy through an electrochemical reaction, is attracting attention in terms of efficiency and the like. In the production of hydrogen, a solid oxide electrolysis cell (SOEC), which applies a high-temperature steam electrolysis method of electrolyzing water in a high-temperature steam state, has been studied. An operation principle of the SOEC is a reverse reaction of the SOFC, and the electrolyte made of solid oxide is used as in the SOFC. The SOEC electrolyzes carbon dioxide (CO₂) to produce carbon monoxide (CO) and synthesizes CO and hydrogen (H₂) to ultimately produce fuels such as methane (CH₄), and therefore is attracting attention as a technology for realizing the decarbonized society.

A solid oxide electrochemical cell used in the SOFC, the SOEC, or the like has a stack of an air electrode (oxygen electrode), a solid oxide electrolyte layer, and a hydrogen electrode (fuel electrode). Such electrochemical cell is used in a large-capacity electrochemical cell stack by stacking a plurality of the electrochemical cells with the interconnector therebetween to form a cell stack. The interconnector for the solid oxide electrochemical cell stack requires high-temperature resistance, so a stainless alloy with high chromium content is generally used as a base of the interconnector. However, an oxide film composed mainly of Cr₂O₃ is formed on a surface of the stainless alloy with high chromium content at high temperatures. Since Cr₂O₃ has high electrical resistance, the oxide film on the surface becomes a factor of decreasing electrical conduction of the interconnector to increase the resistance of the solid oxide electrochemical cell stack. Furthermore, when a Cr component in the Cr₂O₃ film gasifies and adheres to an electrode portion of the solid oxide electrochemical cell, the performance of the solid oxide electrochemical cell is degraded. To prevent these problems, materials applied to the interconnector for the solid oxide electrochemical cell stack have been widely investigated.

In general, the interconnector for the solid oxide electrochemical cell stack is covered with a dense protective film to prevent Cr dispersion. Examples of functions required for the protective film include Cr dispersion prevention, electrical conduction, adhesiveness, and workability. The Cr dispersion prevention is a function of preventing the Cr contained in the interconnector for the solid oxide electrochemical cell stack vaporizing under high-temperature working conditions to degrade the performance of the solid oxide electrochemical cell. The electrical conduction is a function of reducing energy loss by reducing electrical resistance during energization since electricity is necessary for reactions in the solid oxide electrochemical cell. The adhesiveness is a function of preventing the protective film from possibly peeling off due to repetition of temperature rise and fall between high temperature and normal temperature because the working temperature of the solid oxide electrochemical cell is a high temperature of 600°C or higher. The workability is a function of evenly forming the protective film since the interconnector for the solid oxide electrochemical cell stack often has a complex shape.

As the protective film for the interconnector, for example, an oxide that exhibits high electrical conduction in an operating temperature range such as a spinel oxide (a spinel oxide) or a perovskite-type oxide (perovskite oxide) that exhibits electrical conduction is used. However, in the viewpoint of adhesiveness with the interconnector for the solid oxide electrochemical cell, the material, structure, and so on need to be improved also in the spinel oxide that is smaller in thermal expansion coefficient difference with the interconnector for the solid oxide electrochemical cell.

For the above, there is a known technique for improving the adhesiveness by adjusting the composition of the spinel oxide to decrease the thermal expansion difference with the interconnector for the solid oxide electrochemical cell. Further, there is a known technique for improving the adhesiveness by an anchor structure in which the protective film grows roots in the interconnector for the solid oxide electrochemical cell and improving the electrical conduction.

### PRIOR ART DOCUMENT

### PATENT DOCUMENT

Patent Document 1: Japanese Patent No. 5770659
Patent Document 2: Japanese Laid-open Patent Publication No. 2020-066758

### SUMMARY OF THE INVENTION

### PROBLEMS TO BE SOLVED BY THE INVENTION

A problem to be solved by the present invention is to provide an interconnector for a solid oxide electrochemical cell stack capable of improving the electrical conduction by improving the adhesiveness with respect to a metal substrate of a protective film and reducing the electrical resistance, and a solid oxide electrochemical cell stack using the interconnector.

### MEANS FOR SOLVING THE PROBLEMS

An interconnector for a solid oxide electrochemical cell stack in an embodiment, includes: a metal substrate including an iron-based alloy containing chromium; and a protective film provided on the metal substrate in a first direction. The protective film includes: a metal layer provided on a surface of the metal substrate and containing a first metal element; an oxide layer provided above the metal layer and including at least one oxide selected from the group consisting of a spinel-type oxide and a perovskite-type oxide, the at least one oxide containing a second metal element different from the first metal element; and a mixed layer provided between the metal layer and the oxide layer, the mixed layer having a first phase and a second phase, the first phase including the first metal element, and the second phase including the at least one oxide.

### BRIEF DESCRIPTION OF THE DRAWINGS

Fig. 1 is a cross-sectional view illustrating an interconnector for a solid oxide electrochemical cell stack in an embodiment.
Fig. 2 is a cross-sectional view illustrating a solid oxide electrochemical cell stack in an embodiment.
Fig. 3 is a cross-sectional schematic view of a protective film of the interconnector for the solid oxide electrochemical cell stack in the embodiment.
Fig. 4 is a view indicates reflection electron images of cross sections of interconnectors for electrochemical cell stacks according to Comparative Example 1, Comparative Example 2, Example 1, and Example 2 in comparison.
Fig. 5 is a chart illustrates electrical resistances of the interconnectors for the electrochemical cell stacks according to Comparative Example 1, Comparative Example 2, Example 1, and Example 2 in comparison.

### DETAILED DESCRIPTION

Hereinafter, an interconnector for a solid oxide electrochemical cell stack and a solid oxide electrochemical cell stack in embodiments will be explained with reference to the drawings. In the following embodiments, the same codes may denote substantially the same component parts to partially omit explanation thereof. The drawings are schematic ones in which the relationship between the thickness and planar dimensions, a thickness ratio among components, and so on may be different from actual ones.

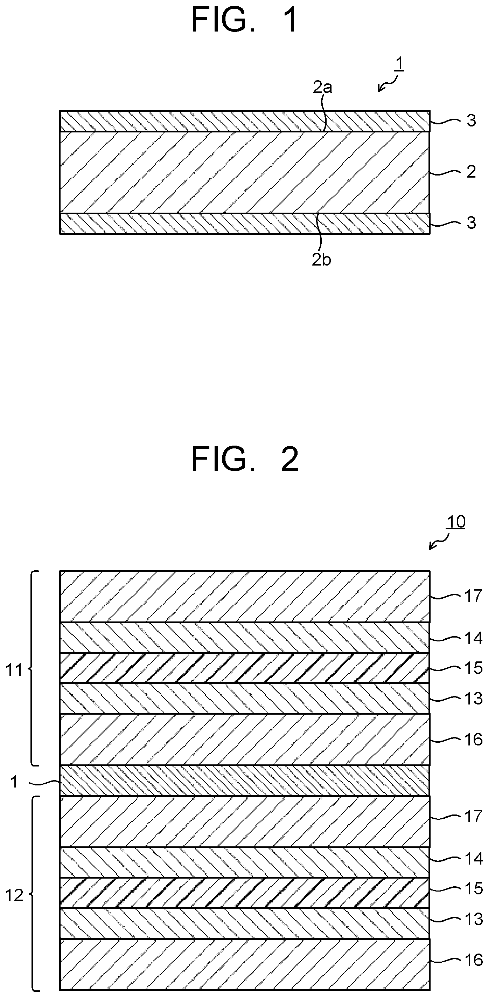

Fig. 1 illustrates a cross section of the interconnector for the solid oxide electrochemical cell stack. An interconnector 1 illustrated in Fig. 1 is an interconnector with an interconnector protective film for a solid oxide electrochemical cell. The interconnector 1 has a metal substrate 2 having a surface 2a and a surface 2b. In using the interconnector 1 in the solid oxide electrochemical cell stack, the surface 2a of the metal substrate 2 is a surface arranged on a hydrogen electrode (fuel electrode) side and is a surface exposed to an atmosphere containing hydrogen. The surface 2b of the metal substrate 2 is a surface arranged on an air electrode (oxygen electrode) side and is a surface exposed to air. The surface 2b is provided, for example, on the opposite side to the surface 2a. Since not only hydrogen is made to flow but also methanol (CH₃OH) or the like is made to flow to the surface 2a side in some cases, for example, in the SOFC, the surface 2a only needs to be a surface exposed to an atmosphere containing a substance having hydrogen atoms. Since not only air is made to flow but also nothing is made to flow or oxygen is made to flow to the surface 2b side in some cases, for example, in the SOEC, the surface 2b only needs to be a surface exposed to an atmosphere containing oxygen. The surface 2a and the surface 2b of the metal substrate 2 are provided with protective films 3. Fig. 1 illustrates the interconnector 1 having the protective films 3 provided on the surface 2a and the surface 2b of the metal substrate 2, but the protective film 3 may be provided only any one of the surface 2a and the surface 2b.

The interconnector 1 illustrated in Fig. 1 is used, for example, for an electrochemical cell stack 10 illustrated in Fig. 2. The electrochemical cell stack 10 illustrated in Fig. 2 is a solid oxide electrochemical cell stack and has a structure in which an electrochemical cell 11 and an electrochemical cell 12 are stacked via the interconnector 1. Fig. 2 illustrates the structure in which the electrochemical cell 11 and the electrochemical cell 12 are stacked but the number of the stacked electrochemical cells is not limited, and a structure in which three or more electrochemical cells are stacked may be provided. In the case of stacking three or more electrochemical cells, the interconnector is arranged between two adjacent electrochemical cells so that the electrochemical cells are electrically connected by the interconnector.

The electrochemical cell 11 and the electrochemical cell 12 have the same configuration, and each have an electrode 13 which functions as the hydrogen electrode (fuel electrode), an electrode 14 which functions as the oxygen electrode (air electrode), and a solid oxide electrolyte layer 15 which is arranged between the electrode 13 and the electrode 14. Each of the electrode 13 and the electrode 14 is formed of a porous electric conductor. The solid oxide electrolyte layer 15 is made of a dense solid oxide electrolyte and is an ion conductor which does not conduct electricity. Between the electrode 13 and the interconnector 1, a porous current-collecting member 16 may be arranged as necessary. Similarly, between the electrode 14 and the interconnector 1, a porous current-collecting member 17 may be arranged as necessary. The current-collecting member 16 and the current-collecting member 17 improve the electrical connection between the electrochemical cell 11 and the electrochemical cell 12, and, the interconnector 1 while passing a reactive gas.

A gas flow path, whose illustration is omitted in Fig. 2, is provided around the electrochemical cell 11 and the electrochemical cell 12. In other words, the electrode 13 and the electrode 14 are supplied with supply gasses according to the usage of the electrochemical cell stack 10, via parts of the respective gas flow paths. The exhaust gases generated in and exhausted from the electrode 13 and the electrode 14 are discharged from the electrochemical cell 11 and the electrochemical cell 12 via other parts of the gas flow paths. The gases to be supplied to the electrode 13 and the electrode 14 and the atmospheres around the electrode 13 and the electrode 14 are separated by the dense solid oxide electrolyte layer 15 and the interconnector 1. In the case of using the electrochemical cell stack 10 as a fuel cell such as the SOFC, a reducing gas such as hydrogen (H₂) or methanol (CH₃OH) gas is supplied to the electrode 13 as the hydrogen electrode (fuel electrode), and an oxidizing gas such as air or oxygen (O₂) is supplied to the electrode 14 as the oxygen electrode (air electrode). In the case of using the electrochemical cell stack 10 as an electrolysis cell such as the SOEC using a high-temperature steam electrolysis method, water vapor (H₂O) is supplied to the electrode 13 as the hydrogen electrode.

The interconnector 1 illustrated in Fig. 1 is used as the interconnector 1 arranged between the electrochemical cell 11 and the electrochemical cell 12 in the electrochemical cell stack 10 illustrated in Fig. 2. In the interconnector 1, the surface 2a of the metal substrate 2 is arranged on the side of the electrode 13 as the hydrogen electrode, and the surface 2b of the metal substrate 2 is arranged on the side of the electrode 14 as the air electrode. Therefore, the surface 2a of the metal substrate 2 is exposed to hydrogen supplied to the electrode 13 as the hydrogen electrode, an atmosphere containing hydrogen such as a mixed gas of hydrogen and water vapor, or a similar atmosphere containing hydrogen discharged from the electrode 13. The surface 2b of the metal substrate 2 is exposed to an atmosphere containing oxygen such as air supplied to the electrode 14 as the air electrode.

In the interconnector 1 used in the electrochemical cell stack 10 illustrated in Fig. 2, an iron-based alloy containing chromium (Cr), namely, stainless steel (SUS) is used for the metal substrate 2. In the electrochemical cell stack 10, for example, the metal substrate 2 made of ferritic stainless steel whose thermal expansion rate is close to those of the electrochemical cell 11 and the electrochemical cell 12 such as SUS430 is used. In the case of using stainless steel for the metal substrate 2, Cr contained in the metal substrate 2 may react with oxygen and water vapor to vaporize in a high-temperature range at 600°C or higher and 1000°C or lower that is a working temperature of the SOFC and the SOEC, and adhere to the electrode 14 to deteriorate the performance. Hence, in order to prevent the vaporization of chromium and the diffusion accompanying it, the interconnector 1 has the protective film 3 covering at least the surface 2b of the metal substrate 2.

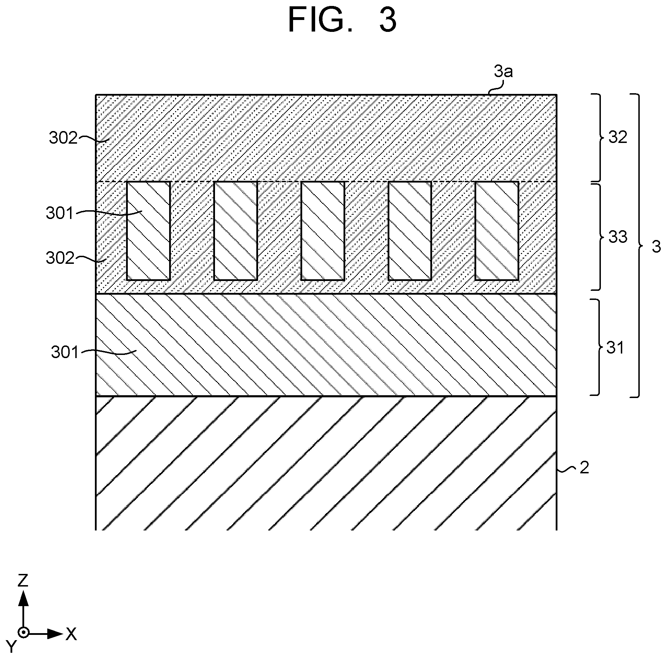

The protective film 3 includes a metal layer 31, an oxide layer 32, and a mixed layer 33 as illustrated in a cross-sectional schematic view in Fig. 3. Fig. 3 indicates an X-axis, a Y-axis, and a Z-axis. The X-axis, the Y-axis, and the Z-axis are orthogonal to one another. Fig. 3 illustrates a part of an X-Z cross section. The thickness of the protective film 3 is preferably 1 µm or more and 50 µm or less. If the thickness is less than 1 µm, it is difficult to obtain the effect of the protective film 3. If the thickness is more than 50 µm, the electrical resistance may increase to greatly decrease the electrical conduction.

The metal layer 31 is provided in contact with the surface (surface 2a, surface 2b) of the metal substrate 2. The metal layer 31 has a metal phase 301 as a main phase. The main phase is a phase having a highest volume ratio among constituent phases of the layer. The metal phase 301 contains a first metal element. The first metal element is preferably, for example, a metal element that is less likely to be oxidized in an operating environment atmosphere of the solid oxide electrochemical cell. Examples of the metal element that is less likely to be oxidized include metal elements such as gold (Au), silver (Ag), platinum (Pt), and so on. Accordingly, the first metal element is at least one metallic element such as gold, silver, and platinum. The presence of the metal layer 31 between the metal substrate 2 and the oxide layer 32 can decrease the crack occurrence rate in the oxide layer 32.

Examples of the method of forming the metal layer 31 include an electrolytic plating method, an electroless plating method, a spin-coating method, a dip-coating method, a sol-gel method, and so on. The metal layer 31 may be formed by forming a metal film or may be formed by forming a metal oxide film and then reducing it. In the case of reducing the metal oxide film, the reduction may be performed on an interconnector with a protective film alone or the reduction may be performed after incorporation in a cell stack or module.

The thickness of the metal layer 31 is preferably 0.5 µm or more and 10 µm or less. If the thickness is less than 0.5 µm, it is difficult to obtain the effect of the metal layer 31. The metal layer 31 is preferable to be thick because the first metal element diffuses in the mixed layer 33 to decrease, but if the thickness is more than 10 µm, the variation in the thickness of the metal layer 31 in a planar direction of the interconnector 1 increases and may adversely affect the soundness of the interconnector 1.

The oxide layer 32 is provided above the metal layer 31. The oxide layer 32 is provided in contact with an outermost surface 3a of the protective film 3. The oxide layer 32 has an oxide phase 302 as a main phase. It is preferable that the oxide phase 302 is not included in the metal layer 31. Further, it is preferable that the oxide layer 32 does not include the metal phase 301.

The oxide phase 302 includes at least one oxide selected from a spinel oxide and a perovskite oxide which exhibit high electrical conduction in operating temperature ranges of the SOFC, the SOEC, and the like. The at least one oxide contains a second metal element different from the first metal element. The spinel oxide is an oxide expressed by AB₂O₄ (A and B are cationic elements such as the same or different metal elements). The perovskite oxide is an oxide expressed by ABO₃ (A and B are cationic elements such as the same or different metal elements). Both the spinel oxide and the perovskite oxide exhibit the electrical conduction in the operating temperature ranges of the SOFC, the SOEC, and the like, and therefore are preferable for the oxide layer 32 required to have electrical conduction.

The second metal element is at least one element of cobalt (Co), nickel (Ni), manganese (Mn), copper (Cu), iron (Fe), chromium (Cr), zinc (Zn), aluminum (Al), titanium (Ti), lanthanum (La), and strontium (Sr). The spinel oxide containing Co is effective as a constituent material of the oxide layer 32. Co functions as both of an A site element and a B site element of the spinel oxide, and therefore can form a spinel oxide expressed by Co₃O₄. Further, a material made by adding at least one selected from Ni, Mn, Cu, Fe, Cr, Zn, Al, Ti to the spinel oxide containing Co is also effective, and can be expected to have effects such as improvement in electrical conduction and mismatch relaxation in thermal expansion rate. Further, a spinel oxide using Fe, Ni, Mn, or the like instead of Co can be used as the constituent material of the oxide layer 32.

Examples of the perovskite oxide include an oxide containing Co and at least one selected from La and Sr, for example, LaCoO₃, SrCoO₃, (La, Sr)CoO₃, and the like. A material made by adding at least one selected from Ni, Mn, Cu, Fe, Cr, Zn, Al, and Ti to the perovskite oxide, for example, La(Co, Fe)O₃, Sr(Co, Fe)O₃, (La, Sr)(Co, Fe)O₃, or the like may also be used. A perovskite oxide made by adding Mn, Ni, or the like instead of Fe may be used. Further, a perovskite oxide containing Mn, Fe, Ni, or the like instead of Co, for example, SrMnO₃, SrFeO₃, SrNiO₃, or the like, and perovskite oxides made by adding the above metal element to them may be used as the constituent material of the oxide layer 32.

Example methods of forming the oxide layer 32 include the electrolytic plating method, the electroless plating method, the spin-coating method, the dip-coating method, the sol-gel method, and so on. The oxide layer 32 may be formed by forming an oxide film or may be formed by forming a metal film and then oxidizing it. In the case of oxidizing the metal film, the oxidation may be performed on an interconnector with a protective film alone or the oxidation may be performed after incorporation in a cell stack or module.

The thickness of the oxide layer 32 is preferably 3 µm or more and 20 µm or less. If the thickness is less than 3 µm, it is difficult to obtain the effect of the oxide layer 32. If the thickness is more than 20 µm, peeling or cracks of the oxide layer 32 may be caused.

The Co-containing spinel oxide or the like is superior in adhesion to the perovskite oxide, but is inferior in electrical conduction to the perovskite oxide. Regarding this point, the formation of the mixed layer 33 makes it possible to increase the electrical conduction and further improve the adhesiveness. The same applies to the case of using the perovskite oxide.

The mixed layer 33 is provided between the metal layer 31 and the oxide layer 32. The mixed layer 33 has a metal phase 301 containing the first metal element as in the metal layer 31 and an oxide phase 302 containing at least one oxide containing the second metal element as in the oxide layer 32. In the mixed layer 33, the metal phase 301 and the oxide phase 302 coexist in a direction (for example, an X-axis direction) perpendicular to the thickness direction of the cross section. The metal phase 301 may extend down to the metal layer 31.

The thickness of the mixed layer 33 is preferably 10% or more and 70% or less of the thickness of the protective film 3, and more preferably 30% or more and 50% or less. The thicker mixed layer 33 leads to a greater decrease in electric resistance, but if the thickness exceeds 70% of the thickness of the protective film 3, the metal contained in the interconnector 1 may become more likely to diffuse to the surface of the protective film 3 through the metal phase 301 or the interface between the metal phase 301 and the oxide phase 302.

The mixed layer 33 has a complicated shape in which the interface between the mixed layer 33 and the metal layer 31 and the interface between the mixed layer 33 and the oxide layer 32 are not flat, and has the metal phase 301 and the oxide phase 302. This can improve the adhesiveness between the metal layer 31 and the oxide layer 32. Further, in the mixed layer 33, the metal phase 301 lower in electrical resistance extends in a direction vertical to the interconnector 1 plane, so that the current preferentially flows through the metal phase 301 during the energization and can greatly reduce the electrical resistance of the interconnector 1. The mixed layer 33 is assumed that the metal phase 301 extends in the direction vertical to the plane of the interconnector 1, but the metal phases 301 distributed in the vertical direction are coupled together so that the metal phase 301 may be distributed in the plane direction of the interconnector 1. In the mixed layer 33, the metal phase 301 functions as an electric conduction path, and therefore the metal phase 301 in the mixed layer 33 preferably has a length of 1 µm or more and equal to or less than the thickness of the mixed layer 33 and further 5 µm or more and equal to or less than the thickness of the mixed layer 33 in the direction (the thickness direction of the protective film 3, for example, the Z-axis direction) vertical to the interconnector 1 plane although depending on the thickness of the protective film 3. On the other hand, if the metal phase 301 reaches the outermost surface 3a of the protective film 3, the Cr element contained in the interconnector 1 may diffuse through the metal phase 301, and therefore the outermost surface 3a of the protective film 3 is preferably the oxide phase 302. On the other hand, a metal component in the metal layer 31 may partially exist as the metal phase 301 in a region of the oxide layer 32.

The mixed layer 33 may be formed using the electrolytic plating method, the electroless plating method, the spin-coating method, the dip-coating method, the sol-gel method, or the like as with the metal layer 31, for example, for the defect such as a pinhole occurring in the oxide layer 32. Not limited to these methods, the mixed layer 33 may be formed by diffusing the metal component in the metal layer 31 in a manner to fill voids derived from the element diffusion formed at high temperatures such as the operation temperature of the solid oxide electrochemical cell. The mixed layer 33 may be formed by forming the metal phase 301 by reducing an oxide film, or conversely the mixed layer 33 may be formed by forming the oxide phase 302 by oxidizing a metal film. These oxidation/reduction treatments may be performed on an interconnector with a protective film alone or may be performed after incorporation in a cell stack or module.

For example, in the case of applying the electrolytic plating method for the formation of the protective film 3, the electrolytic plating is performed by immersing the metal substrate 2 in a first plating bath containing the constituent element of the metal layer 31. Next, the electrolytic plating is performed by immersing the metal substrate 2 in a plating bath containing the constituent element of the oxide layer 32. Next, a thermal treatment is performed in a temperature range of 600°C or higher in an oxidation atmosphere such as atmospheric air or an oxygen atmosphere to oxidize the plating film. Since the metal element as the constituent element of the oxide layer 32 is easily oxidizable, an oxide such as the spinel oxide or the perovskite oxide is produced by the oxidation treatment at high temperature. The oxide to be produced can be controlled by the metal element ratio in the plating bath, the acid atmosphere, or the like. This enables forming the protective film 3 with the mixed layer 33. Also in the case of using another method of forming the protective film 3, the interconnector 1 having the metal substrate 2 and the protective film 3 provided on the surface thereof can be obtained by applying similar conditions.

The protective film 3 including the above mixed layer 33 contributes to the improvement in electrical conduction and adhesiveness of the oxide layer 32 including the spinel oxide or the perovskite oxide. Further, it is possible to prevent the formation of pores at the interface between the metal substrate 2 and the protective film 3 and in the protective film 3. This can increase the contact area between the metal substrate 2 and the protective film 3 to improve the adhesiveness of the protective film 3. Further, the improvement in adhesiveness of the protective film 3 can decrease the electric resistance of the protective film 3.

The metal layer 31, the oxide layer 32, and the mixed layer 33 can be analyzed through a cross-sectional reflection electron image obtained by observing a cross section including a thickness direction (Z-axis direction) of the protective film 3 using a scanning electron microscope (SEM). Further, the composition of each layer can be analyzed by elemental analysis using SEM-energy dispersive X-ray spectroscopy (SEM-EDX). The thickness of the protective film 3 can be defined by an average thickness of the protective film 3 in the cross-sectional reflection electron image.

The metal layer 31 is defined by a first region in which a first phase (metal phase 301) where the concentration of the first metal element is 90 atom% or more and 100 atom% or less continues from the surface 2b of the metal substrate 2 and when a first straight line vertical to a direction (for example, Z-axis direction) vertical to the thickness direction of the protective film 3 is drawn in the cross-sectional reflection electron image, the total length of the first phase is 90% or more and 100% or less of the overall length of the first straight line in the cross-sectional reflection electron image. The thickness of the metal layer 31 is defined by an average thickness of the first region in the cross-sectional reflection electron image.

The oxide layer 32 is defined by a second region in which a second phase (oxide phase 302) that is a phase different from the metal substrate 2 and the first phase and where the oxygen element is detected continues from the outermost surface 3a of the protective film 3 and when a second straight line vertical to the direction (for example, Z-axis direction) vertical to the thickness direction of the protective film 3 is drawn in the cross-sectional reflection electron image, the total length of the second phase is 90% or more and 100% or less of the overall length of the second straight line in the cross-sectional reflection electron image. The thickness of the oxide layer 32 is defined by an average thickness of the second region in the cross-sectional reflection electron image.

The mixed layer 33 is defined by a third region between the first region and the second region in the cross-sectional reflection electron image. The third region includes a region in which when a third straight line vertical to the direction (for example, Z-axis direction) vertical to the thickness direction of the protective film 3 is drawn in the cross-sectional reflection electron image, the total length of the first phase is 20% or more and 80% or less and preferably 40% or more and 60% or less of the overall length of the third straight line, the total length of the second phase is 20% or more and 80% or less and preferably 40% or more and 60% or less of the overall length of the third straight line, and the sum of the total length of the first phase and the total length of the second phase is 95% or more and 100% or less of the overall length of the third straight line. The thickness of the mixed layer 33 is defined by the maximum thickness of the third region in the cross-sectional reflection electron image.

The cases of applying the solid oxide electrochemical cell and the electrochemical cell stack 10 made by stacking the solid oxide electrochemical cells to the SOFC and the SOEC are mainly explained in the above embodiments, and the solid oxide electrochemical cell and the electrochemical cell stack 10 made by stacking the solid oxide electrochemical cells in the embodiments are also applicable to an electrolytic reactor for CO₂.

### EXAMPLES

Next, examples of the interconnector in the embodiment and their evaluation results will be explained.

### (Comparative Example 1)

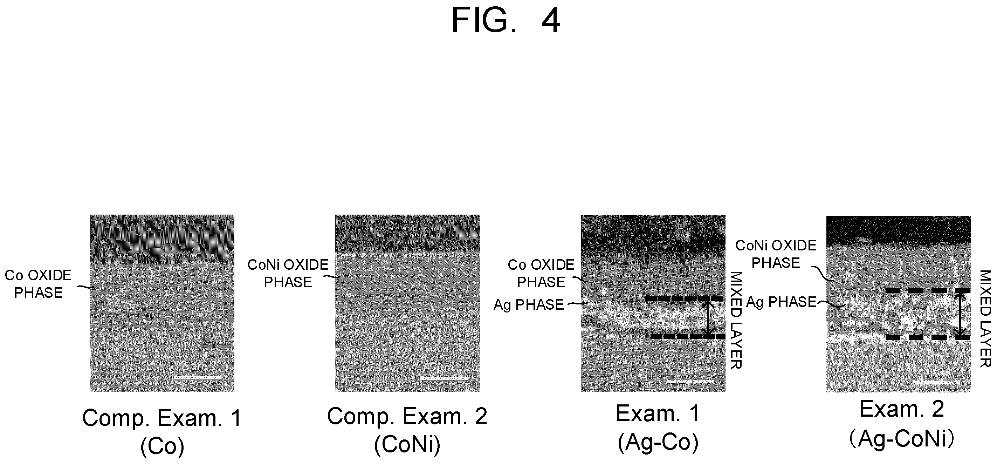

As the metal substrate, a SUS430-based ferrite metal substrate was prepared. Electrolytic plating was performed on the SUS substrate by immersing it in a Co plating bath to form a Co film with a thickness of 2 µm. Next, the SUS substrate formed with the Co plating film was exposed to the atmospheric air at a temperature of 700°C to oxidize the Co plating film. The cross section of the SUS substrate with the Co oxide film thus obtained was observed using the SEM to obtain its cross-sectional reflection electron image. The cross-sectional electron reflection image of Comparative Example 1 is indicated in Fig. 4. Further, the Co film after the oxidization was confirmed to be a Co oxide film mainly containing the spinel oxide expressed by Co₃O₄.

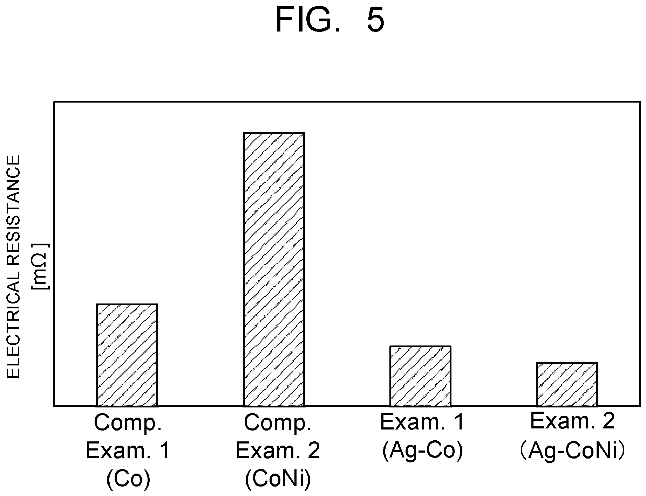

The electrical resistance of the SUS substrate with the Co oxide film thus obtained was measured. The electrical resistance was measured by forming a Pt electrode on the surface of the Co oxide film by Pt deposition and using the four-probe method at a temperature of 700°C. Its result is illustrated in Fig. 5.

### (Comparative Example 2)

As the metal substrate, a SUS430-based ferrite metal substrate was prepared. Electrolytic plating was performed on the SUS substrate by immersing it in a CoNi plating bath to form a CoNi film with a thickness of 4 µm. Next, the SUS substrate formed with the CoNi plating film was exposed to the atmospheric air at a temperature of 700°C to oxidize the CoNi plating film. The cross section of the SUS substrate with the CoNi oxide film thus obtained was observed using the SEM as in Comparative Example 1 to obtain its cross-sectional reflection electron image. The cross-sectional electron reflection image of Comparative Example 2 is indicated in Fig. 4. Further, the CoNi film after the oxidization was confirmed to be a CoNi oxide film mainly containing the spinel oxide expressed by (Co, Ni)₃O₄.

The electrical resistance of the SUS substrate with the CoNi oxide film thus obtained was measured. The electrical resistance was measured by forming a Pt electrode on the CoNi oxide film by Pt deposition and using the four-probe method at a temperature of 700°C as in Comparative Example 1. Its result is illustrated in Fig. 5.

### (Example 1)

As the metal substrate, a SUS430-based ferrite metal substrate was prepared. Electrolytic plating was performed on the SUS substrate by immersing it in an Ag plating bath and then electrolytic plating was performed thereon by immersing it in a Co plating bath to form an Ag film with a thickness of 1 µm and a Co film with a thickness of 2 µm thereon. Next, the SUS substrate formed with the Ag plating film and the Co plating film was exposed to the atmospheric air at a temperature of 700°C to oxidize the Co plating film. The Co film after the oxidization was confirmed to be a Co oxide film mainly containing the spinel oxide expressed by Co₃O₄. The cross section of the SUS substrate with the Ag film and the Co oxide film thus obtained was observed using the SEM as in Comparative Example 1 to obtain its cross-sectional reflection electron image. The cross-sectional electron reflection image of Example 1 is indicated in Fig. 4.

The electrical resistance of the SUS substrate with the Ag film and the Co oxide film thus obtained was measured. The electrical resistance was measured by forming a Pt electrode on the Co oxide film by Pt deposition and using the four-probe method at a temperature of 700°C as in Comparative Example 1. Its result is illustrated in Fig. 5.

### (Example 2)

As the metal substrate, a SUS430-based ferrite metal substrate was prepared. Electrolytic plating was performed on the SUS substrate by immersing it in an Ag plating bath and then electrolytic plating was performed thereon by immersing it in a CoNi plating bath to form an Ag film with a thickness of 1 µm and a CoNi film with a thickness of 4 µm thereon. Next, the SUS substrate formed with the Ag plating film and the CoNi plating film was exposed to the atmospheric air at a temperature of 700°C to oxidize the CoNi plating film. The CoNi film after the oxidization was confirmed to be a CoNi oxide film mainly containing the spinel oxide expressed by Co₃O₄. The cross section of the SUS substrate with the Ag film and the CoNi oxide film thus obtained was observed using the SEM as in Comparative Example 1 to obtain its cross-sectional reflection electron image. The cross-sectional electron reflection image of Example 2 is indicated in Fig. 4.

The electrical resistance of the SUS substrate with the Ag film and the CoNi oxide film thus obtained was measured. The electrical resistance was measured by forming a Pt electrode on the CoNi oxide film by Pt deposition and using the four-probe method at a temperature of 700°C as in Comparative Example 1. Its result is illustrated in Fig. 5.

As indicated in Fig. 4, it can be confirmed that in Example 1 and Example 2 each having a metal layer (Ag metal layer) being an Ag film, a mixed layer having an Ag phase and a Co oxide phase or a CoNi oxide phase is formed between the metal layer and the oxide layer, as a structure having a complex interface between the metal layer and the oxide layer. The length of the Ag phase extending in a direction (thickness direction of the protective film) vertical to the plane of the metal substrate is about 4 µm in Example 1 and about 7 µm in Example 2. The thickness of the mixed layer is about 30% of the thickness of the protective film in Example 1 and about 50% of the thickness of the protective film in Example 2. Further, the Ag phase was locally confirmed also in a portion of the oxide layer.

Further, as illustrated in Fig. 5, it is found that Example 1 and Example 2 having the Ag metal layer are smaller in electrical resistance than Comparative Example 1 and Comparative Example 2 having no Ag metal layer. Further, it is found that Example 2 is smaller in electrical resistance than Example 1.

The above shows that the formation of the mixed layer reduces the electrical resistance. Since the boundary surface between the oxide layer and the metal layer has a complicated shape in the protective film so that the improvement in adhesiveness is expected and the Ag phase with low electrical resistance exists in the protective film, the formation of the mixed layer having the oxide phase and the metal phase can be considered to be a factor indicating low electrical resistance in Example 1 and Example 2. Thus, it is possible to provide an interconnector with a protective film that is less likely to cause peeling of the protective film and is low in electrical resistance. A cell stack equipped with this is improved in soundness of the protective film and can perform an electrochemical reaction with higher energy efficiency.

The configurations in the above-explained embodiments can be applied in combination, and can be partially replaced. While certain embodiments of the present invention have been described above, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE NUMERALS

1...interconnector, 2...metal base material, 2a...surface, 2b...surface, 3...protective film, 3a...outermost surface, 4...protective film, 10...electrochemical cell stack, 11...electrochemical cell, 12... electrochemical cell, 13...electrode, 14...electrode, 15...solid oxide electrolyte layer, 31...metal layer, 32...oxide layer, 33...mixed layer, 301...metal phase, 302...oxide phase.

## Claims

1. An interconnector for a solid oxide electrochemical cell stack, the interconnector comprising:
a metal substrate including an iron-based alloy containing chromium; and
a protective film provided on the metal substrate in a first direction, wherein
the protective film comprises:
a metal layer provided on a surface of the metal substrate and containing a first metal element;
an oxide layer provided above the metal layer and including at least one oxide selected from the group consisting of a spinel oxide and a perovskite oxide, the at least one oxide containing a second metal element different from the first metal element; and
a mixed layer provided between the metal layer and the oxide layer, the mixed layer having a first phase and a second phase, the first phase including the first metal element, and the second phase including the at least one oxide.

2. The interconnector according to claim 1, wherein
the first metal element is at least one element selected from the group consisting of gold, silver, and platinum.

3. The interconnector according to claim 1 or claim 2, wherein
the second metal element is at least one element selected from the group consisting of cobalt, nickel, manganese, copper, iron, chromium, zinc, aluminum, titanium, lanthanum, and strontium.

4. The interconnector according to claim 1 or claim 2, wherein
the second metal element is cobalt and nickel.

5. The interconnector according to any one of claim 1 to claim 4, wherein
a thickness of the mixed layer is 10% or more and 70% or less of a thickness of the protective film.

6. The interconnector according to any one of claim 1 to claim 5, wherein
the first phase has a length of 1 µm or more and equal to or less than a thickness of the mixed layer in a thickness direction of the protective film.

7. The interconnector according to any one of claim 1 to claim 6, wherein
a thickness of the protective film is 1 µm or more and 50 µm or less.

8. A solid oxide electrochemical cell stack comprising:
a first electrochemical cell comprising
a first electrode in contact with an atmosphere containing a substance having a hydrogen atom,
a second electrode in contact with an atmosphere containing oxygen, and
a solid oxide electrolyte layer provided between the first electrode and the second electrode of the first electrochemical cell;
a second electrochemical cell comprising
a first electrode in contact with the atmosphere containing the substance having the hydrogen atom,
a second electrode in contact with the atmosphere containing the oxygen, and
a solid oxide electrolyte layer provided between the first electrode and the second electrode of the second electrochemical cell; and
an interconnector arranged between the first electrode of the first electrochemical cell and the second electrode of the second electrochemical cell so as to be electrically connected to the first electrode of the first electrochemical cell and the second electrode of the second electrochemical cell, wherein
the interconnector comprises:
a metal substrate including an iron-based alloy containing chromium; and
a protective film provided on a surface of the metal substrate,
the protective film comprises:
a metal layer provided on a surface of the metal substrate and containing a first metal element;
an oxide layer provided above the metal layer and including at least one oxide selected from the group consisting of a spinel oxide and a perovskite oxide, the at least one oxide containing a second metal element different from the first metal element; and
a mixed layer provided between the metal layer and the oxide layer, the mixed layer having a first phase and a second phase, the first phase including the first metal element, and the second phase including the at least one oxide.

9. The cell stack according to claim 8, wherein
the first metal element is at least one element selected from the group consisting of gold, silver, and platinum.

10. The cell stack according to claim 8 or claim 9, wherein
the second metal element is at least one element selected from the group consisting of cobalt, nickel, manganese, copper, iron, chromium, zinc, aluminum, titanium, lanthanum, and strontium.

11. The cell stack according to claim 8 or claim 9, wherein
the second metal element is cobalt and nickel.

12. The cell stack according to any one of claim 8 to claim 11, wherein
a thickness of the mixed layer is 10% or more and 70% or less of a thickness of the protective film.

13. The cell stack according to any one of claim 8 to claim 12, wherein
the first phase has a length of 1 µm or more and equal to or less than a thickness of the mixed layer in a thickness direction of the protective film.

14. The cell stack according to any one of claim 8 to claim 13, wherein
a thickness of the protective film is 1 µm or more and 50 µm or less.

## Amended claims

### Amended claims under Art. 19.1 PCT

1. [Amended] An interconnector for a solid oxide electrochemical cell stack, the interconnector comprising:
a metal substrate including an iron-based alloy containing chromium; and
a protective film provided on the metal substrate in a first direction, wherein
the protective film comprises:
a metal layer provided on a surface of the metal substrate and containing a first metal element;
an oxide layer provided above the metal layer and including at least one oxide selected from the group consisting of a spinel oxide and a perovskite oxide, the at least one oxide containing a second metal element different from the first metal element; and
a mixed layer provided between the metal layer and the oxide layer, the mixed layer having a first phase and a second phase, the first phase including the first metal element, and the second phase including the at least one oxide, and
the first phase is distributed in a direction vertical to the surface of the metal substrate.

2. The interconnector according to claim 1, wherein
the first metal element is at least one element selected from the group consisting of gold, silver, and platinum.

3. The interconnector according to claim 1 or claim 2, wherein
the second metal element is at least one element selected from the group consisting of cobalt, nickel, manganese, copper, iron, chromium, zinc, aluminum, titanium, lanthanum, and strontium.

4. The interconnector according to claim 1 or claim 2, wherein
the second metal element is cobalt and nickel.

5. The interconnector according to any one of claim 1 to claim 4, wherein
a thickness of the mixed layer is 10% or more and 70% or less of a thickness of the protective film.

6. The interconnector according to any one of claim 1 to claim 5, wherein
the first phase has a length of 1 µm or more and equal to or less than a thickness of the mixed layer in a thickness direction of the protective film.

7. The interconnector according to any one of claim 1 to claim 6, wherein
a thickness of the protective film is 1 µm or more and 50 µm or less.

8. [Amended] A solid oxide electrochemical cell stack comprising:
a first electrochemical cell comprising
a first electrode in contact with an atmosphere containing a substance having a hydrogen atom,
a second electrode in contact with an atmosphere containing oxygen, and
a solid oxide electrolyte layer provided between the first electrode and the second electrode of the first electrochemical cell;
a second electrochemical cell comprising
a first electrode in contact with the atmosphere containing the substance having the hydrogen atom,
a second electrode in contact with the atmosphere containing the oxygen, and
a solid oxide electrolyte layer provided between the first electrode and the second electrode of the second electrochemical cell; and
an interconnector arranged between the first electrode of the first electrochemical cell and the second electrode of the second electrochemical cell so as to be electrically connected to the first electrode of the first electrochemical cell and the second electrode of the second electrochemical cell, wherein
the interconnector comprises:
a metal substrate including an iron-based alloy containing chromium; and
a protective film provided on a surface of the metal substrate,
the protective film comprises:
a metal layer provided on a surface of the metal substrate and containing a first metal element;
an oxide layer provided above the metal layer and including at least one oxide selected from the group consisting of a spinel oxide and a perovskite oxide, the at least one oxide containing a second metal element different from the first metal element; and
a mixed layer provided between the metal layer and the oxide layer, the mixed layer having a first phase and a second phase, the first phase including the first metal element, and the second phase including the at least one oxide, and
the first phase is distributed in a direction vertical to the surface of the metal substrate.

9. The cell stack according to claim 8, wherein
the first metal element is at least one element selected from the group consisting of gold, silver, and platinum.

10. The cell stack according to claim 8 or claim 9, wherein
the second metal element is at least one element selected from the group consisting of cobalt, nickel, manganese, copper, iron, chromium, zinc, aluminum, titanium, lanthanum, and strontium.

11. The cell stack according to claim 8 or claim 9, wherein
the second metal element is cobalt and nickel.

12. The cell stack according to any one of claim 8 to claim 11, wherein
a thickness of the mixed layer is 10% or more and 70% or less of a thickness of the protective film.

13. The cell stack according to any one of claim 8 to claim 12, wherein
the first phase has a length of 1 µm or more and equal to or less than a thickness of the mixed layer in a thickness direction of the protective film.

14. The cell stack according to any one of claim 8 to claim 13, wherein
a thickness of the protective film is 1 µm or more and 50 µm or less.
